# EUROPEAN PATENT APPLICATION

(11) **EP 3 988 209 A1**
(43) Date of publication of application: **27.04.2022**
(21) Application number: 20202904.7
(22) Date of filing: 20.10.2020
(51) Int. Cl.: B01J 35/00, B01J 35/02, B01J 37/02, B01J 37/08, B01J 37/16, B01J 23/42, B01J 23/745, B01J 37/04

(54) **CATALYST MANUFACTURING BY MULTIPLE UNIT OPERATIONS IN A MIXER REACTOR**

(71) Applicant: BASF SE, 67056 Ludwigshafen am Rhein (DE)
(72) Inventor: ÇETINEL, Fatih, 67056 Ludwigshafen (DE); KREUDER, Heike, 67056 Ludwigshafen (DE); SCHROETER, Marie Katrin, 67056 Ludwigshafen (DE); SEIDEMANN, Lothar, 67056 Ludwigshafen (DE)
(74) Representative: Hollah, Dorothee

(57) **Abstract**

A process for the preparation of a supported catalyst, wherein at least three steps of the following process steps
i) impregnation of a catalyst support,
ii) drying of the catalyst precursor obtained,
iii) post treatment of the dried catalyst precursor by at least one of steps
iiia) calcination and/or
iiib) reduction with a reducing agent
are carried out in one specific free-fall mixer reactor; and a supported catalyst prepared by said process.

## Description

The present invention relates to a process for the preparation of a supported catalyst, wherein at least three steps of the following process steps
i) impregnation of a catalyst support,
ii) drying of the catalyst precursor obtained,
iii) post treatment of the dried catalyst precursor by at least one of steps
   iiia) calcination and/or
   iiib) reduction with a reducing agent
   are carried out in one specific free-fall mixer reactor,
   and a supported catalyst prepared by said process.

The manufacturing of supported catalysts comprise a number of different complex process steps, e.g. impregnation of a catalyst support with a solution of one or more metal salts, drying the catalyst precursor obtained, calcination and/or reduction of the catalyst precursor. Each process step requires specific process parameters. Therefore, the process steps for manufacturing of supported catalysts are generally carried out in different reactor types.

However, there is a demand for integrated solutions, wherein more than one process step are carried out in the same reactor. The properties of the supported catalysts should however not be negatively affected by such integrated solution.

It is therefore an object of the present invention to provide a process for the preparation of supported catalysts, wherein multiple process steps are carried out in one reactor (in one unit). It is a further object of the present invention to provide a supported catalyst which is characterized by a high homogeneity and dispersion of metal distribution and/or an improved catalyst performance.

The object is solved by a process for the preparation of a supported catalyst comprising the following steps:
i) impregnation of a catalyst support with a solution of one or more metal salts and/or one or more metal organic compounds, whereby a catalyst precursor is obtained;
ii) drying the catalyst precursor;
iii) post treatment of the dried catalyst precursor by at least one of
   iiia) calcination and/or
   iiiib) reduction with a reducing agent,
   whereby the supported catalyst is obtained;
   wherein
   at least steps i), ii), and at least one of steps iiia) and iiib) are carried out in a free-fall mixer reactor in form of a horizontal drum mixer which is constructed to rotate around an axis running horizontally to the middle of the drum equipped with an inlet and an outlet, wherein the drum is additionally equipped with
   - baffles fixed at the inner drum and free of internal axial agitators,
   - at least one feed for liquid metal salt and/or metal organic compound solutions in form of one or more nozzles,
   - at least one of
      - a double wall/jacket for heating, and/or
      - at least one feed for gas supply,
   wherein
   in step i) the catalyst support is introduced into the drum of the horizontal drum mixer at the inlet, and the solution of one or more metal salts and/or one or more metal organic compounds is introduced into the drum of the horizontal drum mixer at one or more nozzles,
   and
   in step ii) drying of the catalyst precursor is carried out by (1) conductive heating using thermal liquid or steam or (2) convective heating by hot gas, (3) vacuum, or (4) a combination of (1), (2) and/or (3).

The process of the present invention is therefore - in one embodiment - a 3-in-1 concept, wherein three steps (i), (ii), and at least one of (iiia) or (iiib) are carried out in the specific free-fall mixer reactor described above. Preferably, steps (i), (ii) and (iiib) are carried in the 3-in-1 concept in the specific free-fall reactor. In step (iiib), the reducing agent is introduced into the drum of the horizontal drum mixer at one or more nozzles. In said preferred embodiment of the 3-in-1 concept, the calcination in step iiia) is carried out in an external device or step iiia) is omitted. Suitable external devices are known by a person skilled in the art. Suitable examples are: rotary kiln, rotary hearth kiln, heated moving bed, conveyor furnace, shaft furnace and muffle oven.

In a further embodiment of the process of the present invention, steps (i), (ii), (iiia) and (iiib) are carried out in the specific free-fall mixer described above (4-in-1 concept).

The 3-in-1 and 4-in-1 process according to the present invention have many advantages over the processes for the preparation of supported catalysts known in the art:
- cost-saving by reduction of the specific invest for new production lines by replacing different reactor types by one unit,
- increased production capacity (i.e. shortened process time),
- cost-saving by lower precious-metal handling and wastage (improved precious metal balance),
- reduction of off-spec due to lower mechanical stress and less attrition,
- sustainable production by meeting strict demand of EHS (environment (E), health (H), safety (S)) regulation or CMR (cancerogenic, mutagenic, reprotoxic) containment,
- product performance improvement by defined and homogeneous catalyst impregnation.

### Free-fall mixer reactor

The free-fall mixer reactor is in form of a horizontal drum mixer which is constructed to rotate around an axis running horizontally to the middle of the drum equipped with an inlet and an outlet.

The drum is additionally equipped with
- baffles fixed at the inner drum and free of internal axial agitators,
- at least one feed for liquid metal salt solutions and/or metal organic compound solutions in form of one or more nozzles,
- at least one of
   - double wall/jacket for heating, and/or
   - at least one feed for gas supply.

The horizontal drum mixer can be made to rotate around an axis running horizontally through the middle of the drum by means of one or more motors. Suitable motors are known by a person skilled in the art.

The speed of rotation of the drum is preferably in the range of from 1 to 100 revolutions per minute, more preferably 2 to 50 revolutions per minute and most preferably 3 to 5 revolutions per minute.

In principle, the drum mixer can be made of any material, especially of steel or plastics. Preferably, the drum is made of steel, especially high-grade steel, preferably stainless steel.

The drum mixer is preferably cylindrical in configuration, it being possible for the rear and the front top region optionally to be dome-like in construction. The cylindrical configuration also includes those in which the jacket region is not strictly cylindrical in configuration, for example is configured as a bulged or curved form or with an hourglass-like construction.

The diameter of the drum is preferably in a range of from 1 m to 50 m, more preferably 2 m to 10 m and most preferably 2.5 m to 5 m. The length of the drum is preferably in a range of from 1 m to 20 m, more preferably 2 m to 10 m and most preferably 3 m to 7 m.

The filling volume of the drum is preferably in a range of from 1 I to 100000 I, more preferably from 10 I to 50000 I and most preferably from 100 I to 25000 I.

The drum mixer comprises as mixing aids baffles which are fixed at the inner part of the drum (i.e. the drum of the drum mixer comprises an inner part, wherein the mixing aids (baffles) are fixed, and an outer part). The drum mixer is free of internal axial agitators. The mixing aids (baffles) can be made of any material, especially of metal or plastics. Preferably, the baffles are made of steel, especially high-grade steel, preferably stainless steel, and can optionally also be coated with suitable polymers, for example with polypropylene or poly(tetrafluoroethylene) polymers.

The number of fixed baffles is preferably in the range of from 1 to 50, more preferably 2 to 25, most preferably 3 to 6.

Preferably, each and every particle in the drum mixer always moves, and the mixing takes place with virtually no shear forces. The drum is preferably in absence of dead spaces.

The drum mixer comprises, usually in the front top region, an inlet which can optionally be equipped with inlet aids, such as screws, slide valves, shakers, cellular wheel sluices, or sources of compressed air or a combination of at least two of said inlet aids, via which the catalyst support can be introduced into the drum mixer.

The drum mixer further comprises an outlet, preferably a regulatable outlet, via which the supported catalyst or the supported catalyst precursor can be discharged from the drum mixer.

The drum mixer additionally comprises at least one feed as a further inlet unit for the liquid metal salt solution and/or one or more metal organic compound solution in form of one or more nozzles. By said nozzle(s), the injection of the liquid metal salt solution and/or one or more metal organic compound solution can preferably be carried out in form of fine droplets.

The drum mixer preferably additionally comprises at least one feed for gas supply, such as for example for hot gas, like hot air or an inert gas, which can be used as a heat source. Said heat source is preferably used in step (ii) for convective heating (2).

In the case that the reduction in step iiib) is carried out in the free-fall mixer reactor and a gas, like hydrogen or a mixture of hydrogen, and inert gas is used as reducing agent, the drum mixer comprises a feed for said gas used as reducing agent.

In addition or as an alternative to the feed for hot gas supply, the drum mixer comprises a double wall/jacket for heating with for example thermal liquid (heat transfer oil) or steam. Said heat source is preferably used in step (ii) for conductive heating (1).

Further, the drum mixer may comprise a vacuum device.

The drum mixer therefore comprises
i) no feed for gas supply (in the case that the heating is exclusively achieved by a double wall/jacket for heating and no reducing agent in form of a gas is needed),
ii) one feed for gas supply which is used for hot gas supply as a heat source and/or for gas supply in case a gas is needed as reducing agent, or
iii) one feed for hot gas supply, in case that it is used as a heat source and one additional feed for gas supply in case a gas is needed as reducing agent.
iv) It is further possible that the drum mixer comprises more than two feeds for gas supply.

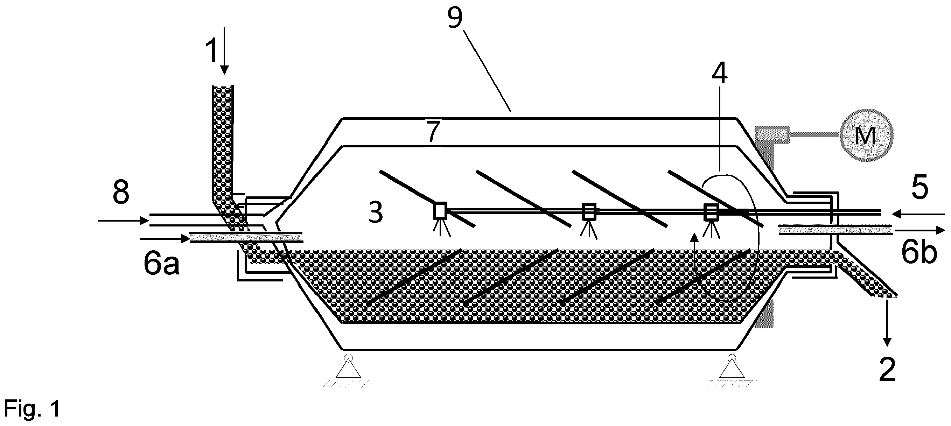

In Fig. 1 a preferred free-fall mixer reactor (drum mixer) is shown. Said drum mixer comprises a feed for gas supply (preferably for hot gas supply) and a double wall/jacket. As mentioned above, it is also possible that the drum mixer comprises either a feed for gas supply or a double wall/jacket. It is also possible that the drum mixer comprises more than one feed for gas supply (in addition to a double wall/jacket or in the absence of a double wall/jacket). It is further possible that the drum mixer comprises more than one nozzle as feed for liquids.

The numbers in Fig. 1 have the following meanings:
1 Particle inlet
2 Particle outlet
3 Fixed baffles
4 Rotating direction
5 Feed for liquid in form of one or more nozzles
6a Feed for gas supply
6b Gas out
7 Double Wall/Jacket
8 Feed for thermal liquid, oil or steam
9 Rotating drum
M power unit, preferably motor

### Process

In the process according to the present invention, the catalyst support is in step i) introduced into the drum of the horizontal drum mixer at the inlet, and the solution of one or more metal salts and/or of one or more metal organic compounds is introduced into the drum of the horizontal drum mixer at one or more nozzles. In step ii), the drying of the catalyst precursor obtained in step i) can be carried out by (1) conductive heating using thermal liquid, oil or steam, or (2) convective heating by hot gas, (3) vacuum, or (4) a combination of (1), (2) and/or (3).

According to the process of the present invention, the supported catalyst is prepared by impregnation.

Step i) of the process according to the present invention is therefore the impregnation of the catalyst support with a solution of one or more metal salts and/or of one or more metal organic compounds, whereby a catalyst precursor is obtained.

The impregnation step i) according to the process of the present invention is generally known in the art. Preferably, in the process according to the present invention, step i) is an incipient wetness impregnation. In incipient wetness impregnation (also called capillary impregnation or dry impregnation) the volume of the solution of appropriate concentration is - depending on the desired catalyst type - equal (100% of the pore volume of the support or another active solid phase, e.g. in the preparation of homogeneous catalyst) or less than (10% to < 100%, preferably 15% to 95%, more preferably 30% to 90% of the pore volume of the support or another active solid phase, e.g. in the preparation of egg-shell catalysts, egg white catalysts or egg yolk catalysts) the pore volume of the support or another active solid phase. In the case that the volume of the solution is less than 100% of the pore volume of the support or another active solid phase, the concentration of the one or more metal salts and/or of one or more metal organic compounds in the solution has to be adapted to realize the desired metal content in the supported catalyst.

The catalyst support is generally an inorganic or carbon support, whereby any support known in the art can be used. Preference is given to a catalyst support selected from the group consisting of Al₂O₃ (γ, β or α), SiO₂, TiO₂, ZrO₂, MgO, carbon (C), alumino silicates, zeolites, and ceramic materials, or mixtures thereof. A preferred catalyst support is selected from Al₂O₃ (γ, β or α), SiO₂, TiO₂, ZrO₂, MgO, carbon (C), and alumino silicates, or mixtures thereof.

The catalyst support may be present, for example, in the form of spheres, tablets, rings, stars or other shaped bodies or powder. The diameter or the length and thickness of the catalyst support is preferably in the range from 0.5 to 15 mm, more preferably from 3 to 9 mm. The surface area of the support may be freely selected depending on the practical consideration for the particular application case. The surface area is preferably from 1 to 2000 m²/g. Suitable supports are known to those skilled in the art.

Suitable solvents for providing the solution of the one or more metal salts and/or of the one or more metal organic compounds in step i) are water, organic solvents or mixtures of both. The solution of one or more metal salts and/or of the one or more metal organic compounds in step i) is therefore an aqueous or organic solution or a mixture of both.

Suitable organic solvents are for example alcohols, especially C₁-C₄-alcohols, like methanol, ethanol, n-propanol or iso-propanol. Suitable mixtures of water and organic solvents are mixtures of water and organic solvents miscible with water, like the organic solvents mentioned before. Preferably, the water may comprise up to 90 vol%, more preferably up to 80 vol%, most preferably up to 50 vol% of one or more of the organic solvents mentioned before. Further most preferably, water is used as solvent. It is also possible to use aqueous organic or inorganic acids as solvents. Suitable acids are for example acetic acid, formic acid or citric acid.

Suitable metal salts employed in step i) of the process of the present invention are any metal salts known by a person skilled in the art (depending on the desired application). Preferred metals in the metal salts employed in step i) are metals of at least one of the groups 7, 8, 9, 10 or 11 of the Periodic Table of the Elements (IUPAC), preferably selected from the group consisting of Fe, Ru, Rh, Pt, Pd, Cu, Ni, Co, Re and Ag.

Suitable salts are any salts known by a person skilled in the art, for example acetate, acetyl acetonate, nitrate, ammonium-salts, citrate and halide.

Suitable metal organic compounds employed in step i) of the process of the present invention are any metal organic compounds known by a person skilled in the art (depending on the desired application). Preferred metal organic compounds employed in step i) are acetyl acetonates, acetates, citrates formats and amino alcohol salts.

Preferably, metal salts are employed in step i) of the process of the present invention, whereby preferred metal salts are mentioned above.

The impregnation in step i) can be carried out for one time, but also for more than one time depending on the amount of the metal present in the final supported catalyst. Preferably, one impregnation is carried out.

It is further possible that a first impregnation is carried out with one first metal salt and/or one first metal organic compound and a second impregnation is carried out with a metal salt and/or a metal organic compound comprising a different metal of the metals mentioned above. It is also generally possible to carry out the impregnation with a solution of more than one metal salts and/or metal organic compounds comprising different metals of the metals mentioned above.

The concentration of the metal salt in the solution of one or more metal salts in step i) depends on the amount of metal desired in the final supported catalyst and on the solubility of the metal salt in the solution. Generally, the concentration of the metal salt in the metal salt solution in step i) is less than 20 wt%, more preferably 0.01 to 18 wt%, most preferably 0.1 to 15 wt%, relating to the total amount of the metal salt solution.

Also, the concentration of the metal organic compound in the solution of one or more metal organic compounds in step i) depends on the amount of metal desired in the final supported catalyst and on the solubility of the metal organic compound in the solution. Generally, the concentration of the metal organic compound in the metal organic compound solution in step i) is less than 20 wt%, more preferably 0.01 to 18 wt%, most preferably 0.1 to 15 wt%, relating to the total amount of the metal organic compound solution.

Generally, the metal salt solution and/or the metal organic compound solution employed in step i) of the process of the present invention comprises only low amounts of halogen, especially chlorine, preferably no or less than 500 weight ppm, more preferably less than 100 weight ppm, most preferably 0 to less than 80 weight ppm halogen, based on the total amount of the metal salt solution and/or the metal organic compound solution.

The metal salt solution and/or the metal organic compound solution is introduced into the drum mixer comprising the catalyst support at one or more nozzles.

The impregnation in step i) is generally carried out at room temperature (25°C) to 90°C, preferably at room temperature (25°C) to 50°C, more preferably at room temperature. The impregnation is carried out at normal pressure (1013 mbar) or in vacuo (< 1013 mbar, e.g. 10 mbar to 900 mbar), preferably at normal pressure.

The drying in step ii) can be carried out by
(1) conductive heating using thermal liquid or steam, whereby suitable thermal liquids are known by a person skilled in the art,
(2) convective heating by hot gas; suitable hot gas is for example air or an inert gas, for example nitrogen or argon,
(3) vacuum, or
(4) a combination of (1), (2) and /or (3).

Preferably, the drying is carried out by (1) and/or (2).

The drying of the catalyst precursor obtained in step i) of the process of the present invention is carried out in step ii) of the process according to the present invention.

The drying of the catalyst precursor in step ii) is generally carried out at temperatures known by a person skilled in the art. Preferred drying temperatures in step ii) are 50°C to 200°C, more preferably 95°C to 180°C.

The process of the present invention is carried out by a short drying time of generally 0.5 hours to 8 hours, preferably 1 hour to 7 hours, more preferably 2 hours to 5 hours.

Preferably, the drying of the catalyst precursor is carried out at normal pressure. However, it is also possible to carry out the drying in step (ii) under vacuum, for example at 10 mbar to 900 mbar. The amount of water, respectively volatiles before the post treatment in step iii) is generally less than 5 wt%, preferably less than 1 wt%, based on the total amount of the catalyst precursor. The amount by weight mentioned above relates to the weight loss of the catalyst precursor determined at a temperature of 105°C and a pressure of 1 bar for 10 minutes (LOD (loss on drying)).

In step iii) of the process of the present invention, a post treatment of the dried catalyst precursor is carried out. Said post treatment is either carried out by calcination (step iiia)) or by reduction with a reducing agent (step iiib)) or by both, steps iiia) and iiib).

The calcination in step iiia) is generally carried out at a temperature of 200°C to 800°C, preferably 240°C to 650°C, usually at normal pressure. The calcination time is usually from 10 minutes to 16 hours, preferably 20 minutes to 10 hours, more preferably 30 minutes to 5 hours.

Generally, calcination is heating in an oxidative or inert gaseous atmosphere, for example an atmosphere comprising oxygen and optionally further inert components. Preferably, the oxidative gaseous atmosphere is air.

The calcination step iiia) may be carried out in a different reactor than the free-fall mixer reactor in form of a horizontal drum mixer mentioned before.

Suitable other reactors for carrying out the calcination are for example rotary kiln, rotary hearth kiln, heated moving bed, muffle oven, conveyor furnace or shaft furnace.

Preferably, step iiia) is carried out in the free-fall mixer described above.

The calcination step iiia) may be omitted in one embodiment of the present invention. In this case, the post treatment of the dried catalyst precursor is step iiib) only, i.e. a reduction with a reducing agent.

In step iiib) the reduction of the catalyst precursor is carried out, whereby the catalytically active supported catalyst is obtained.

The reducing agent in step iiib) is generally hydrogen or a mixture of hydrogen with an inert gas, for example nitrogen or argon. Preferably, a mixture of hydrogen with an inert gas, for example nitrogen or argon, is used as reducing agent.

As an alternative, a metal salt solution, for example sodium-formate or organic reducing agents, like hydrazine, formaldehyde, formiates, citric acid or acetates, can be used as reducing agents.

The reduction is generally carried out at a temperature of 20°C to 750°C, preferably 50°C to 600°C. The reduction time is generally 0.5 hours to 8 hours, preferably 1 hour to 5 hours.

In the case that hydrogen or a mixture of hydrogen and an inert gas is employed as reducing agent, the pressure can be varied, for example from 0.2 bar to 1.5 bar. The reduction with hydrogen or a mixture of hydrogen and an inert gas is often carried out at normal hydrogen pressure in a gas flow of hydrogen or a mixture of hydrogen with an inert gas.

The reduction in step iiib) of the present invention is carried out in the free-fall mixer reactor in form of a horizontal drum mixer mentioned above or in another reactor, for example in a rotary kiln, batch, plug flow, reduction column or a rotary calciner. The most suitable reactor depends on the type of catalyst prepared, and a person skilled in the art knows which reactor is most suitable.

Preferably, the reduction is carried out - together with at least steps i) and ii) - in the free-fall mixer reactor in form of a horizontal drum mixer mentioned above.

In the case that no step iiib) is carried out in the process of the present invention, an activation of the then obtained supported catalyst precursor can be carried out directly before using the supported catalyst precursor, either in a separate reactor, whereby suitable reactors for the reduction are mentioned above or directly in the reactor, wherein the active catalyst is used.

Preferably, the reduction in step iiib) is carried out in the process of the present invention.

The reducing agent is in step iiib) introduced into the drum of the horizontal drum mixer at one or more nozzles.

In one preferred embodiment, therefore, process steps i), ii), and iiib) are carried out in the free-fall mixer reactor in form of a horizontal drum mixer mentioned above. The calcination step iiia) may in said embodiment either be omitted or carried out in a different reactor.

In a further embodiment, steps i), ii), iiia) and iiib) are carried out in the free-fall mixer reactor in form of a horizontal drum mixer according to the present invention.

After the reduction in step iiib), the catalyst obtained can be passivated for an easier handling as known in the art (step iiic)). The passivation (step iiic)) can for example be achieved by treatment with an oxygen-containing gas, like air, but preferably an inert gas mixture comprising 1 to 10 vol% oxygen. Also, CO₂ or CO₂/O₂ mixtures can be used.

The passivation in step iiic) is carried out in the free-fall mixer reactor in form of a horizontal drum mixer according to the present invention or in a different reactor. Suitable reactor types for the passivation are known in the art, for example a column or a rotary calciner.

As mentioned above, the process according to the present invention has many advantages. One major advantage is the increased production capacity, since the process is much faster than the processes for the preparation of supported catalysts known in the art.

Generally, supported catalysts which can be prepared with the process according to the present invention are for example egg-shell catalysts, homogeneous catalysts, egg white catalysts or egg yolk catalysts. Preferably, egg-shell catalysts are prepared.

The present invention therefore further relates to a supported catalyst prepared by the process of the present invention.

The amount of metal present in the supported catalysts obtained depends on the intended use of the catalyst. Generally, the supported catalysts obtained by the process of the present invention comprises 0.005 wt% to 40 wt%, preferably 0.01 wt% to 20 wt% of metal, based on the total weight of the catalyst. The metal mentioned before is derived from the metal salt solution and/or the metal organic compound solution employed in step i) of the process according to the present invention.

A further advantage of the process according to the present invention is the homogeneous distribution of the metal in the catalyst precursor respectively in the catalyst prepared by the process according to the present invention.

Especially in the case of an egg-shell catalyst, 80 wt% to 100 wt% of the metal in the supported catalyst added in the impregnation in step i) in form of one or more metal salts and/or one or more metal organic compounds to the catalyst support, preferably 90 wt% to 100 wt%, more preferably 95 wt% to 100 wt%, are present in the egg-shell.

The thickness of the egg-shell in the egg-shell catalyst is generally 10 µm to 1500 µm, preferably 50 µm to 1000 µm.

A further subject of the present invention is therefore a supported catalyst prepared by the process according to the present invention. As mentioned above, said supported catalysts are characterized by a homogenous distribution of the metal in the support.

Preferably, the supported catalyst is an egg-shell catalyst. As also mentioned above, more preferably, 80 wt% to 100 wt% of the metal in the supported catalyst added in the impregnation step i) in form of one or more metal salts and/or one or more metal organic compounds to the catalyst support, preferably 90 wt% to 100 wt%, more preferably 95 wt% to 100 wt% are present in the egg-shell. The amount and kind of the metal in the inventive supported catalyst is mentioned above. Also, the catalyst support of the inventive supported catalyst is mentioned above.

The inventive catalyst is therefore preferably an egg-shell catalyst having preferably a thickness of the egg-shell mentioned above.

The invention is illustrated by the examples herein below.

### Examples

In Examples 1 and 2, the catalyst prepared is as follows: Porous alumina tablets (3.3 to 3.5 mm) impregnated with aqueous metal salt solution (Fe).

### Example 1

### Reduced drying time up to 70% compared to state-of-the-art process technology

### Comparative example:

Mixer drum without agitator (double-cone mixer)
Impregnation and drying in one apparatus; followed by reduction in another device (fixed-bed column);
Drying time with 100% full impregnation (water uptake) of catalyst carriers: 10 to 16h

Free-fall mixer in 3-in-1 cascade concept (inventive example):
Impregnation and drying in one apparatus; followed by reduction in the same apparatus;
Drying time: 2 to 5h

### Example 2

### High homogeneity of metal distribution in tablets after impregnation

### Comparative example:

Mixer drum without agitator (double-cone mixer)
Impregnation and drying in one apparatus; followed by reduction in another device (fixed-bed column);
Inhomogeneous distribution of the metal, up to 400% deviation

Free-fall mixer in 3-in-1 cascade concept (inventive example):
Impregnation and drying in one apparatus; followed by reduction in the same apparatus: Improved mixing quality and homogeneity proven by EDX measurements.

For 50% impregnation (water uptake of tablets = egg-shell):
Homogeneity in a production batch verified by thickness measurements of the egg-shell structure: standard error of egg-shell thickness within 95% confidence interval 9% for an average egg-shell thickness of 382 µm

### Example 3

Wet reduction of a process catalyst; Problem: Containment by conveying material among different devices.

The process catalyst is a Pt/Bi catalyst comprising 1 wt% Pt and 0.3 wt% Bi on an Al₂O₃ support. The wet reduction was carried out with Na-formiate.
The calcination was in both cases (comparative and inventive process) carried out in an oven.

### Comparative example:

Impregnation with a metal salt solution in a mixer;
Wet reduction in a fixed-bed column;
Drying in another device (mixer).

Free-fall mixer reactor in 3-in-1 cascade concept (inventive example):
All steps in one unit:
Impregnation with a metal salt solution;
Wet reduction in a moved bed/ mixture of catalyst in free-fall mixer and liquid reducing agent (option 1) or feeding of liquid reducing agent to dry catalyst identical to impregnation process by using nozzles (option 2);
Drying.

### Containment significantly improved:

Process intensification results in overall efficient process and an improved catalyst performance compared with a catalyst having an identical composition but being prepared by a process not according to the invention.

The catalyst conversion of a Pt/Bi catalyst is improved by 8.5% and yield 7.5% higher than compared to the comparative example; reason: wet reduction in moved bed results in overall improved reduction by better mass transport into porous catalyst beads; in the case of option 1 and in the case of option 2 the improvement was validated compared to the comparative process.

## Claims

1. A process for the preparation of a supported catalyst comprising the following steps:
i) impregnation of a catalyst support with a solution of one or more metal salts and/or one or more metal organic compounds, whereby a catalyst precursor is obtained;
ii) drying the catalyst precursor;
iii) post treatment of the dried catalyst precursor by at least one of
iiia) calcination and/or
iiiib) reduction with a reducing agent,
whereby the supported catalyst is obtained;
wherein
at least steps i), ii), and at least one of steps iiia) and iiib) are carried out in a free-fall mixer reactor in form of a horizontal drum mixer which is constructed to rotate around an axis running horizontally to the middle of the drum equipped with an inlet and an outlet, wherein the drum is additionally equipped with
- baffles fixed at the inner drum and free of internal axial agitators,
- at least one feed for liquid metal salt and/or metal organic compound solutions in form of one or more nozzles,
- at least one of
- a double wall/jacket for heating, and/or
- at least one feed for gas supply,
wherein
in step i) the catalyst support is introduced into the drum of the horizontal drum mixer at the inlet, and the solution of one or more metal salts and/or one or more metal organic compounds is introduced into the drum of the horizontal drum mixer at one or more nozzles,
and
in step ii) drying of the catalyst precursor is carried out by (1) conductive heating using thermal liquid or steam or (2) convective heating by hot gas, (3) vacuum, or (4) a combination of (1), (2) and/or (3).

2. The process according to claim 1, wherein steps i), ii) and iiib) are carried out in the free-fall mixer, and in step iiib) the reducing agent is introduced into the drum of the horizontal drum mixer at one or more nozzles.

3. The process according to claim 1 or 2, comprising the steps i), ii), iiia) and iiib), wherein steps i), ii), iiia) and iiib) are carried out in the free-fall mixer.

4. The process according to any one of claims 1 to 3, wherein the catalyst support is selected from the group consisting of Al₂O₃ (γ, β or α), SiO₂, TiO₂, ZrO₂, MgO, carbon (C), alumino silicates, zeolites, and ceramic materials, or mixtures thereof, preferably Al₂O₃ (γ, β or α), SiO₂, TiO₂, ZrO₂, MgO, carbon (C), and alumino silicates, or mixtures thereof.

5. The process according to any one of claims 1 to 4, wherein the solution of one or more metal salts and/or one or more metal organic compounds in step i) is an aqueous or organic solution, or mixtures of both.

6. The process according to any one of claims 1 to 5, wherein the metal in the metal salts in step i) is a metal of one of the groups 7, 8, 9, 10 or 11 of the Periodic Table of the Elements (IUPAC), preferably selected from the group consisting of Fe, Ru, Rh, Pt, Pd, Cu, Ni, Co, Re and Ag.

7. The process according to any one of claims 1 to 6, wherein the impregnation in step i) is an incipient wetness impregnation.

8. The process according to any one of claims 1 to 7, wherein the drying of the catalyst precursor in step ii) is carried out at a temperature of 50°C to 200°C, preferably 95°C to 180°C, usually for 0.5 h to 8 h, preferably 1 h to 7 h, more preferably 2 h to 5 h.

9. The process according to any one of claims 1 to 8, wherein the calcination in step iiia) is carried out at a temperature of 200°C to 800°C, preferably 240°C to 650°C, usually for 10 minutes to 16 hours, preferably 20 minutes to 10 hours, more preferably 30 minutes to 5 hours.

10. The process according to any one of claims 1 to 9, wherein the reducing agent in step iiib) is hydrogen, a mixture of hydrogen with an inert gas, a metal salt solution or an organic reducing agent and the reduction is carried out at a temperature of 20°C to 750°C, preferably 50°C to 600°C, generally for 0.5 h to 8 h, preferably 1 h to 5 h.

11. The process according to any one of claims 1 to 10, wherein the supported catalyst is an egg-shell catalyst, a homogeneous catalyst, an egg white catalyst or an egg yolk catalyst, preferably an egg-shell catalyst.

12. The process according to claim 11, wherein the egg-shell of the egg-hell catalyst has a thickness of 10 µm to 1500 µm, preferably 50 µm to 1000 µm.

13. The process according to claim 11 or 12, wherein 80 wt% to 100 wt% of the metal in the supported catalyst added in the impregnation step i) according to claim 1 in form of one or more metal salts and/or one or more metal organic compounds to the catalyst support, preferably 90 wt% to 100 wt%, more preferably 95 wt% to 100 wt%, are present in the egg-shell.

14. A supported catalyst prepared by a process according to any one of claims 1 to 13.

15. The supported catalyst according to claim 14, wherein the catalyst is an egg-shell catalyst.
